# EUROPEAN PATENT APPLICATION

(11) **EP 2 487 322 A1**
(43) Date of publication of application: **15.08.2012**
(21) Application number: 11250139.0
(22) Date of filing: 08.02.2011
(51) Int. Cl.: E21B 7/26, E21B 11/00

(54) **Moling apparatus**

(71) Applicant: British Telecommunications Public Limited Company, London EC1A 7AJ (GB)
(72) Inventor: The designation of the inventor has not yet been filed
(74) Representative: Geffen, Nigel Paul

(57) **Abstract**

Apparatus for digging through a sidewall of a pit (P) using a self-propelled mole (20), comprising a frame having a support (6) for hanging the frame into the pit by placing the support (12) on ground surrounding the pit, and a cradle (8) to hold the mole (20),
wherein the cradle (8) includes angle-adjustment means and is attached at an unadjustably fixed vertical position along the frame, so that in use the mole (20) is held in a position within the pit for insertion into the sidewall at a depth which is unadjustably fixed relative to ground surface, and at an angle which is adjustable relative to the ground surface.

## Description

The present invention relates to apparatus and methods relating to the trenchless installation of subterranean infrastructure such as utility and service ducting using moling techniques.

In the field of telecommunications, ever-greater deployment of optical fibre in the access network to bring "fibre to the home" (FTTH) involves considerable civil engineering time and cost. Delivering optical fibre to vast numbers of non-commercial premises throughout the country is an undertaking on a huge scale, which nonetheless must be carried out in a cost-sensitive, non-disruptive manner. In the UK, the National Joint Utilities Group (NJUG) is the industry association representing utilities companies in respect of street works. NJUG requirements for FTTH fibre installation is a shallow cable burial depth of between 250 and 350 mm from the ground surface.

In an example of FTTH implementation, "blown fibre" can be deployed. This method is described in e.g. EP 108590, where two points are optically connected in a two-stage process. First, an empty "blown fibre tube" is initially provisioned along the path between the two points. Subsequently, as and when the optical connection is required, a fibre or fibre unit (comprising a number of individual fibres) is installed through the waiting fibre tube, by "blowing" it through the tube, whereby the fibre or fibre unit is pulled along through the tube by the effects of viscous drag. Various types of tubing or ducting for blown fibre use exist. Mini- or micro-ducts are one type of blown fibre duct which is used particularly nearer the customer end in the access network.

Various methods are used to install the required ducting into the ground. As can be expected, surface-dug trenches can generate considerable disturbance on the ground surface level and/or in the amount of noise, fumes, congestion and the like the installation process creates. Trenchless methods on the other hand, involve the creation of horizontal bores without surface disruption, and obviate the need to dig a substantially continuous trench or channel along the entire path to be taken by an underground tube or cable, and typically involve the initial excavation of one or more ditches or pits. Machinery and equipment for impact moling or ramming through the ground is lowered into the pit to form a horizontal bore through a sidewall or raised bank of the pit at the required depth. The ducts or bore are formed using moling apparatus such as hydraulic pipe ramming, moling using percussive heads, guided drilling techniques, and the like.

As known from e.g. GB 2111565, powered impact moles or rams generally comprise a tubular body including a reciprocal hammer enabling the ram to self-propel through the ground by compressing the soil surrounding the cavity or bore created. They are therefore also known as soil displacement hammers. Some advanced models are capable of reverse travel and may be steerable within the ground during use to a limited degree. Generally however, it is important to ensure that at launch, the mole is correctly aligned in terms of depth and angle, as it is difficult if not impossible to correct the travel path without having to dig down to the mole.

During installation, the moling apparatus is typically set on the floor of the pit on or within a launch pad or frame. The pit has to be deep enough to allow the mole to be launched at the required depth. The floor of the pit needs to be made sufficiently level so that the supporting legs of the frame can be well engaged with the pit floor allowing the frame to securely hold the mole at the required depth and angle during the launch process. The pit must also often be wide enough to accommodate not just the mole and the launch frame, but also the engineer or operative standing on the floor of the pit installing the mole, the frame, and the depth and angle of mole launch.

In the context of FTTH, vast numbers of such ducts will need to be dug under pavements and front gardens to reach cabinets, curbs and/or premises. The resulting inconvenience and disruption would be unacceptable especially in a residential context. More crucially, it is anticipated that in the UK alone, tens of thousands of metres of optical fibre will have to be laid the length and breadth of the land to support the millions of end customers, an exercise involving 32,000 engineers. The cumulative time, cost, and effort involved in digging numerous pits with stringent size and level requirements of the type described above, even before the start of digging the required bores to run optical fibre through them, would be enormous. In view of the cost-sensitivity of non-commercial customers, the resources for this monumental task are often simply unavailable, which is a primary deterrent in the widespread adoption of fibre for communications worldwide.

Launch frames used for moling and drilling purposes of for a variety of applications are known. The typical launch frame used for a powered percussive mole is a type of elongated cradle having a V- or U-shaped cross section which accommodates the tubular mole body, and may include components for adjusting the angle at which the mole is held. During use, the launch cradle is placed at the bottom of a pit which is dug by the engineer or operative who stands on the pit floor to prepare the mole for launch into a sidewall of the pit.

The above apparatus and method suffer from several problems which make it less than ideal for high-volume, low-cost FTTH optical fibre installation which need to adhere to the above-mentioned NJUG depth specifications. The digging of the pit to the required depth itself requires too much time, skill and cost. Furthermore, the pit floor must be prepared so that it is sufficiently level to allow the mole launch cradle to be secured e.g. with stakes so that it does not move excessively in response to the hammering action of the mole. The pit has to be of a size allowing for the operative to stand and work within it to prepare the mole for launch, which includes ensuring that the mole insertion depth and angle are correct (e.g. by using a surveyor's stake which is usually placed on the body of the mole itself).

Frames for activities akin to moling are known from e.g. US 4589499, which describes a heavy-vehicle-sized apparatus for drilling holes into concrete structures along their length, to enable insertion of dowel pins for enlargement of the structures. The apparatus comprises an expandable frame mounted on motorised wheels, which the operative drives along the length of an elongate trench on the side banks. As the hole is to be formed in the sidewall of the trench, the section of the frame supporting the drill dips into the trench. By using a spacer bar to measure the distance from a previously-drilled hole, a number of subsequent holes can be formed which are regularly spaced out from each other. The frame is adjustable in length, width and height, and the drill is operated using a complex winch and cable system. As the ramming or hammering component of a drill remains outside the hole formed (in contrast with a hammer mole, which works its way through the substrate within which the hole or bore is to be formed), it is important to ensure that the apparatus is secured within the trench through the drilling session, which adds to the bulk and complexity of the apparatus.

Another, smaller, frame for drilling is described in US 2005/0072587. This apparatus is for use in small-bore drilling in e.g. a building basement. Unlike the above apparatus described in US 4589499, this frame substantially describes a single plane, and does not include any supports which rest on the ground whether within a trench or outside of it. Instead, when it is needed to anchor the frame to the walls of the basement, hydraulic jacks which extend from the frame are used to secure the apparatus to the sidewalls of the pit during the drilling session.

A frame for manually installing a push rod underground is described in WO 2010/092315. Like the apparatus of US 4589499, the frame is supported on the ground level above a pit, so that the component installing the push rod hangs downwardly into the pit. Like the apparatus used for drilling, this frame includes a mechanism for securing the apparatus within the pit for the duration of the installation session.

None of the above known apparatus is ideal for the creation of underground bores to allow installation of optical fibre using a powered mole in a FTTH context. As noted above, a quick, cheap, lightweight, relatively non-disruptive solution requiring less, and less-skilled, manpower, is needed to make the business case for FTTH especially outside high-density urban environments. A desirable solution should nonetheless be capable of highly precise mole insertion depths and angles, given the very limited opportunities for path correction thereafter especially in the case of non-steerable moles.

It would be desirable for a moling apparatus which address the above issues.

According to a first aspect of the present invention there is provided apparatus for digging through a sidewall of a pit using a self-propelled mole, comprising a frame having a support for hanging the frame into the pit by placing the support on ground surrounding the pit, and a cradle to hold the mole, wherein the cradle includes angle-adjustment means and is attached at an unadjustably fixed vertical position along the frame, so that in use the mole is held in a position within the pit for insertion into the sidewall at a depth which is unadjustably fixed relative to ground surface, and at an angle which is adjustable relative to the ground surface.

By providing for the mole to be located at a predetermined, unalterable depth within the pit immediately upon installation of the frame into the pit during an installation session, the set-up time and effort required is considerably reduced. A frame which needs no vertical adjustment in this respect may be simply hung into a pit which may be finished to a less exacting standard (in terms of depth and levelness of the pit bottom) than was previously needed, as the reference distance is taken from the ground surface. Furthermore, the ground surface slope is already taken into account to at least some extent as the frame support or supports take reference from the ground surface upon which they rest. However, the angle or direction of alignment can be further refined by the adjustability of the cradle which holds the mole for insertion into the sidewall of the pit.

The mole cradle of the invention enables the mole to be installed into the ground at a fixed depth (requiring no separate measurement) yet for the ground slope to be taken into consideration. As might be expected in shallow boring, it is vitally important to ensure that the mole is travelling essentially parallel to the ground surface, and not to break through it by proceeding at an inappropriate angle.

In preferred embodiments, the apparatus of the invention is lightweight, small in size, and suitable for a single operative to install and use. The apparatus is preferably used in concert with a small pit, which reduces the level of spoil generated, the noise and disruption involved in the creation of a larger pit, as well as the time and cost and skill involved in preparing the pit as well as in filling it back in.

According to a second aspect of the present invention there is provided a system for digging through a sidewall of a pit using a self-propelled mole, comprising apparatus according to any preceding claim, a compressor and a pressure control unit.

According to a third aspect of the present invention there is provided a method of digging through a sidewall of a pit, comprising:
- digging a pit,
- installing apparatus according to the invention by hanging the frame into the pit by placing the support on ground surrounding the pit,
- using the cradle to hold a mole,
- adjusting the angle of the mole for insertion into the sidewall relative to the ground surface, and
- using the mole to digging through the sidewall of the pit.

Preferred embodiments of the invention will now be described, by way of example only, with reference to the accompanying drawings, in which:
Figure 1 is a schematic side view of apparatus for use with a moling device,
Figure 2 is a general view of the apparatus for use with a moling device,
Figure 3 depicts the apparatus in an installed position, and
Figure 4 shows components of a system including the moling device for installing an underground bore.

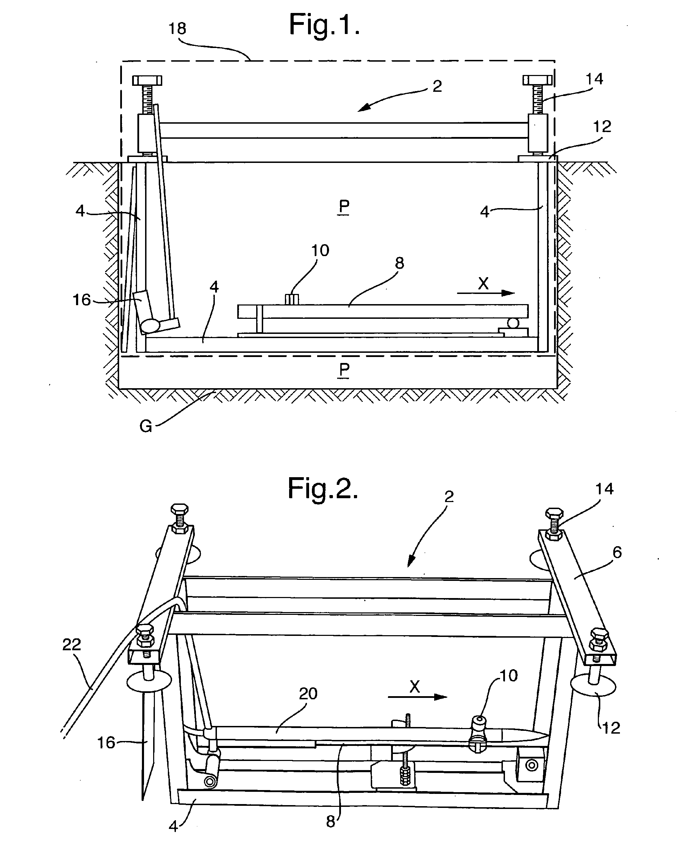

An example of a moling device of the invention is shown in Figure 1. It generally comprises a frame (2) made up of a plurality of bars (4), which together define a boxy space within the frame having a substantially square or rectangular cross section. In use, the frame is suspended into a pit (P) dug from the ground (G). The pit comprises, in the main, of a floor and the surrounding sidewall or sidewalls (which are' typically but not always substantially vertical relative to the ground surface level) leading down from the ground surface level to the floor pit. The sidewall usually comprises a substantially continuous surface defining the side of the pit and may or may not include corners and angles; the term "sidewall" and the like shall however in the present context refer to the "different" walls which are facing different directions within the pit.

The uppermost section of the frame is formed from supporting crossbars (6), which in length extend beyond the boxy space defined by the other bars, so that they rest on ground level on support feet (12) while the rest of the frame hangs downwardly into the pit. The support feet are height-adjustable (14) within a small range, to compensate for uneven terrain under the support feet, to allow the frame to suspend generally downwards orthogonal to the general slope of the ground. In a preferred embodiment, the frame occupies substantially all space available within the pit as shown in Figure 1.

At the opposite end of the frame, a mole launch cradle (8) which in the Figure 1 is shown to be empty and ready to receive a mole, a ram or similar device (not shown) is secured at or near the bottom edge of the frame. It is preferably located at a position closer to one side of the frame than the other, with the intent that a mole be positioned within the cradle to be inserted into the pit wall closer to that side of the frame i.e. in the direction "X" in the example shown in the figure. The cradle includes a resistance roller (10) which helps to maintain mole alignment which might otherwise be lost during the hammering action of the mole during use.

An amount of insertion angle or direction adjustment is afforded by the cradle in two or more preferably three dimensions by use of an appropriate pivot such as a ball joint. Angle alignment accuracy can be crucial especially in non-steerable moles, where the initial launch is the only opportunity for the operative to control the path taken, short of digging it up during the moling session. This is all the more important in the face of very specific requirements such as those by NJUG for which there is not only a narrow margin of error, but also involves a shallow installation for which the chances of a misaligned mole breaking ground cover are correspondingly higher.

However, aside from capacity for fine adjustment of mole angle or alignment at point of insertion, the vertical location of the cradle relative to the vertical frame bars is not changeable. This advantageously reduces the complexity otherwise involved in frames of the prior art which allow for them to be used in a variety of pits and trenches.

Hanging the frame downwardly from the ground level realises another important advantage of the invention: the depth of the launch cradle, and any mole encased within the cradle, is determined relative to the ground surface. In a situation where a bore is to be installed e.g. 350 mm below the ground surface, use of a frame of the invention where the launch cradle is unadjustably secured to the frame 350 mm below the support crossbars is likely to yield consistently accurate results as it is not possible for the mole to be inserted at a depth considerably far off from 350 mm.

Using the ground surface is a more reliable and accurate reference point, than referring to the floor or walls of the dug pit. This also enables an otherwise difficult result of aligning the frame to be swiftly and easily achieved, i.e. to align the cradle in a direction generally parallel to the slope of the ground surface, regardless of whether this is a flat surface, or one sloping upwards or downwards. In other words, the mole is not necessarily launched along a horizontal path, it is aligned according and with reference to the ground surface slope.

Moreover, the time taken to obtain such results would be considerably reduced as there is no need to dig a trench having a floor depth of exactly 350 mm (after taking into account the height/depth of the mole cradle) from the ground surface. Nor is there any need to carefully prepare a level surface at the bottom to rest the launch cradle upon and/or to enable an operative to safely work within the pit. All that is required is that the pit should suffice to accommodate the frame, so the pit wall and floor may be finished roughly. This is a boon in areas of rocky soil or the like where the digging is itself difficult without the further demand for a smooth level finish. It would also be appreciated that by restricting the size of the pit, the duration of the installation session would be reduced. Another advantageous outcome is that the amount of surface disruption is minimised. The applicants envisage raising a flagstone which in the UK has the typical having ground surface dimensions of 600 mm x 600 mm, and digging a pit in the exposed area for use with the frame. This may be compared to a moling pit using conventional equipment, which is typically 2 or 3 times larger. By digging in the ground exposed by a lifted flagstone which is replaced after the end of the moling session, visible interference with the ground surface can be almost completely avoided, which is an important consideration especially in a residential setting.

Yet another benefit in the use of the smaller pit filled by the frame is that the operative may remain above ground during the entire session. Working at the bottom of a muddy pit while standing in water in inclement conditions is unpleasant enough; there is also the potential for danger such as collapsing sidewalls, necessitating operational rules and regulations and safety codes, such as requirements for pits to be back sloped or shored. This adds to the cost and complexity of the operation, which can be reduced by retaining the operative above ground.

Turning back to Figure 1, a clamp plate (16) is optionally and preferably provided to allow the frame to fit snugly within a larger pit. This reduces the chance of any movement of the frame during operation of the mole which is likely to change the alignment of the mole path into the ground. The plate can be secured in place being pressed against a pit wall by the operative making the necessary adjustments and bolting or screwing the plate into position. The skilled person would appreciate that the plate may be otherwise secured by e.g. being spring-load to urge against the sidewall.

In a preferred embodiment, the moling frame may be further provided with a bag (18) which during use almost completely surrounds the frame, save for a hole through which the mole passes to enter the sidewall. The purpose of the bag is to keep the working area clean, and also helps maintain the integrity of the pit walls during the hammering activity of the mole during operation.

Figure 2 depicts a general view of an exemplary moling frame of the invention, which better shows the boxy space defined by the bars (4) which has a rectangular cross section. A mole (20) is included in this view, which is positioned within the launch cradle and ready to be installed in the direction "X". A hose is attached to the opposite end of the mole, which connects the mole to a source of pressurised air which powers its hammering action during operation.

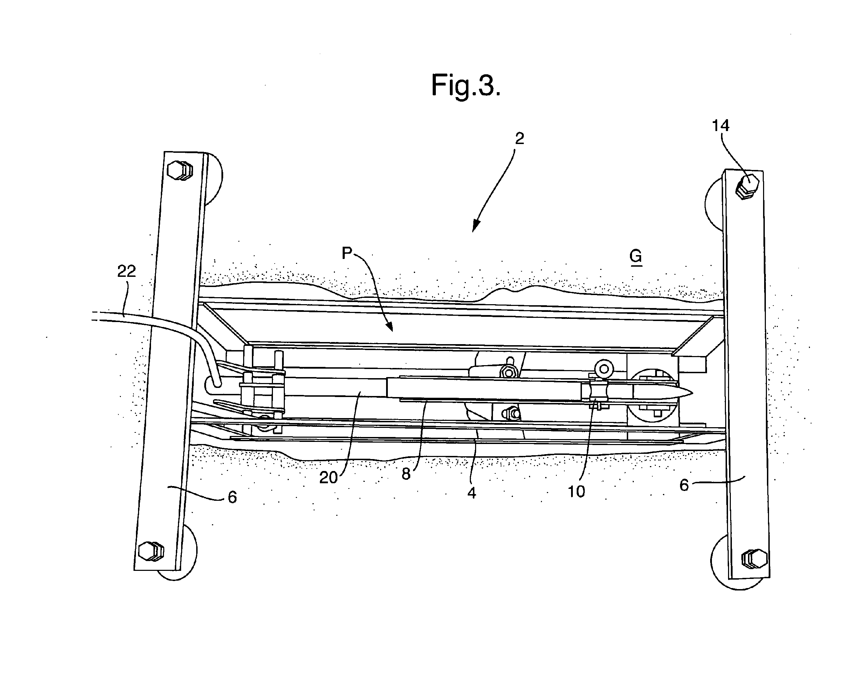

Figure 3 shows the exemplary moling frame of Figure 2 within a pit (P). The launch cradle (8) and the resistance roller (10) bearing down lightly on the mole (20) are clearly visible in this view. Also visible are the support crossbars (6), showing how they rest on the ground surface while the rest of the mole hangs downwards into the pit. The relatively small pit (having the dimensions of about 550 mm x 250 mm) can be seen to be substantially filled by the frame, so that there is no room for an operative - which indeed is advantageously unnecessary.

Instead, the operative would typically go through the following steps to install a bore using the moling frame of the invention. First, he digs a pit of sufficient size to accommodate the frame, but which is narrower than the length of the support crossbars. The mole can be loaded onto the launch cradle at this point, and the operative then lowers the frame into the pit in a way so that the support crossbars rest on the ground surface. Significantly, the frame is sufficiently simple, small and lightweight enabling a single person to handle, install and operate the moling apparatus. This of course is very important in terms of efficiency in manpower, time, and cost terms especially for the purposes of FTTH.

The operative then makes fine adjustments to the height of the support feel to take into account any ground surface irregularities under them. Optionally, the clamp plate is moved to a position to put pressure on the pit sidewall and secured into place. If the mole was not already put on the cradle earlier, it can now be placed on the cradle channel while the frame is in the pit. The exact insertion angle and alignment is adjusted, preferably in three dimensions. Once this has been settled upon, the mole is powered up and begins its progress along the cradle channel and into the sidewall, hammering itself though the ground. Once the mole has left the cradle, the frame is no longer needed within the pit and can be removed in readiness for the next job. Thus the frame is used primarily for mole depth and angle alignment, in contrast with frames used for drilling or for push rod installation by manual means, where the frame needs to be remain in place through the entire session as it is not used as leverage or in any other way to aid the physical movement of the reaming article into the ground.

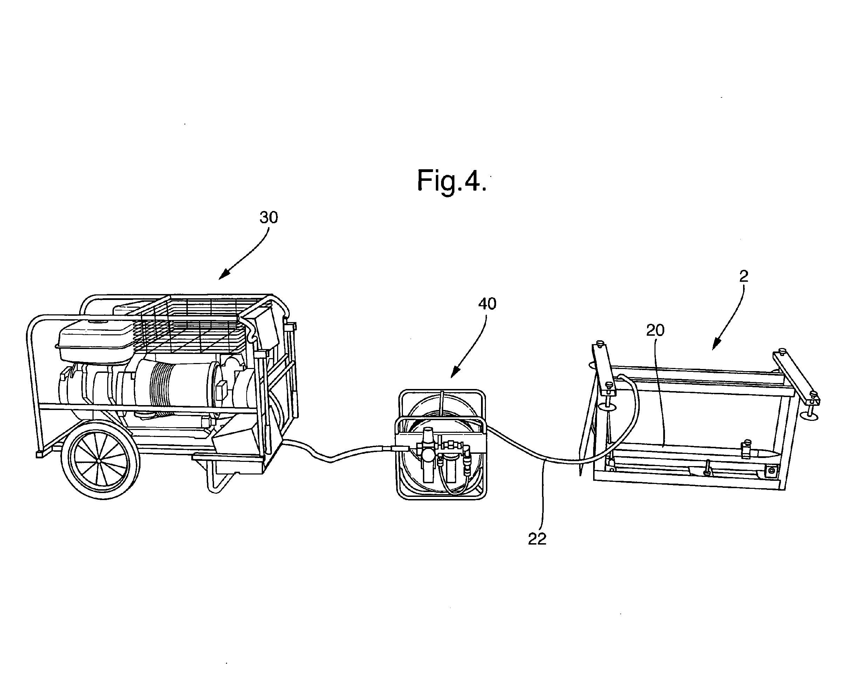

The primary components of a session to create a bore using an impact mole is shown in Figure 4. A mole (20) placed in the frame (2) of Figures 2 and 3, and is connected by its hose pipe (22) to a compressor (30) via a pressure control unit (40).

The skilled person would appreciate that although the above description is provided in the context of optical fibre and FTTH, that the apparatus and methods of the invention are equally applicable to the moling to create bore for use as any type of piping, tubing, ducting or the like for any purpose, such as those of utility suppliers such as water or electricity, cable television, ground heat extraction or in commercial applications such as oil and gas. The application of the invention is also not confined to the access network or points near the customer end - the bore created or tubes to be installed may be located anywhere within a network or otherwise of ducting. It would also be possible to use the apparatus and methods described herein in conjunction with conventional methods, e.g. to create a small bore as a initial guide or to pull back larger-diameter duct; or to initially create a small bore which can be subsequently enlarged by using a pressure nozzle or pressure jet or vibration.

The methods, devices and configurations described above and in the drawings are for ease of description only and not meant to restrict the invention to any particular embodiments. It will be apparent to the skilled person that various components, devices and permutations on the methods and devices described are possible within the scope of this invention as disclosed. For example, the frame need not specifically define a boxy space having a rectangular cross section. The frame could equally define e.g. a trapezoid space in three dimensions, and be capable of imparting the same advantages in use. The angular alignment of the mole in the cradle could be obtained by use of a spring or a deformable catch in place of a ball joint. The invention can be deployed in a variety of contexts to realise the advantages afforded by its use.

The skilled person would also appreciate that a number of variations may be made to the precise location and configuration and materials used for the components and parts making up the apparatus that would be within the scope of the inventive concept. For example, the bars making up the frame may be formed from lightweight hollow tubes, and/or the launch cradle may be attached to the frame with a ball joint allowing from three dimension adjustment of the mole alignment.

## Claims

1. Apparatus for digging through a sidewall of a pit using a self-propelled mole, comprising a frame having a support for hanging the frame into the pit by placing the support on ground surrounding the pit, and a cradle to hold the mole,
wherein the cradle includes angle-adjustment means and is attached at an unadjustably fixed vertical position along the frame, so that in use the mole is held in a position within the pit for insertion into the sidewall at a depth which is unadjustably fixed relative to ground surface, and at an angle which is adjustable relative to the ground surface.

2. Apparatus according to claim 1 wherein the angle-adjustment means comprises a ball joint.

3. Apparatus according to claim 1 or claim 2 wherein the support comprises adjustable support feet.

4. Apparatus according to any preceding claim further comprising a clamp plate for securing the frame within the pit during use.

5. Apparatus according to any preceding claim further comprising a bag for surrounding the frame during use.

6. Apparatus according to any preceding claim wherein the frame is dimensioned for installation into the pit by a single user.

7. Apparatus according to claim 6 wherein the frame has a width of about 550 mm and a width of about 250 mm, and the cradle is arranged to hold the mole at a depth of about 350 mm.

8. A system for digging through a sidewall of a pit using a self-propelled mole, comprising apparatus according to any preceding claim, a compressor and a pressure control unit.

9. A method of digging through a sidewall of a pit, comprising:
- digging a pit,
- installing apparatus according to any one of claims 1 to 7 by hanging the frame into the pit by placing the support on ground surrounding the pit,
- using the cradle to hold a mole,
- adjusting the angle of the mole for insertion into the sidewall relative to the ground surface, and
- using the mole to digging through the sidewall of the pit.
